Europäisches Patentamt

(19) European Patent Office

Office européen des brevets

(11) Numéro de publication: **0 128 992**
A1

## (12) DEMANDE DE BREVET EUROPEEN

(21) Numéro de dépôt: 83440065.7

(22) Date de dépôt: 20.12.83

(51) Int. Cl.³: **B 60 P 7/08**

(30) Priorité: 21.06.83 FR 8310361

(43) Date de publication de la demande:
27.12.84 Bulletin 84/52

(84) Etats contractants désignés:
AT BE CH DE GB IT LI LU NL SE

(71) Demandeur: LOHR S.A.
14, rue du 14 Juillet
F-67 980 Hangenbieten(FR)

(72) Inventeur: Vogel, Lucien
43A, rue du Moulin
F-67200 Wolfisheim(FR)

(72) Inventeur: Godenir, Roland
32, Rue du Fort
F-67120 Soultz-les-Bains(FR)

(74) Mandataire: Metz, Paul
Cabinet METZ PATNI 95, rue de la Ganzau
F-67100 Strasbourg(FR)

(54) Cale escamotable pour l'immobilisation de voitures automobiles en charge sur un véhicule de transport routier.

㉗ Cale escamotable sur plan de charge d'un véhicule routier transporteur de voitures automobiles.

Cale escamotable à structures repliables articulées remarquable par un mécanisme de verrouillage (19) en position montée coopérant avec la surface d'assise ou socle (3) par des moyens de blocage et en ce que l'une des structures possède des moyens d'accrochage dans les perforations du chemin de roulement.

Cette invention intéresse les constructeurs et utilisateurs de véhicules transporteurs de voitures.

EP 0 128 992 A1

./...

FIG. 1

- 1 -

0128992

La présente invention se rapporte à une cale escamotable à monter sur chemin de roulement de véhicules routiers transporteurs de voitures automobiles.

La majorité des voitures automobiles neuves sont transportées jusqu'aux lieux de vente : centres d'achat, garages... par la route sur des véhicules semi-remorque adaptés.

Ces remorques spécifiques comportent sur chaque étage deux chemins de roulement en tôles perforées délimitant des emplacements successifs pour les voitures transportées.

Ces voitures sont conduites jusqu'à ces emplacements par le personnel affecté au chargement. Elles montent sur le véhicule porteur par une rampe inclinée et roulent sur le chemin de tôles perforées jusqu'à l'emplacement désigné.

Pour des raisons de sécurité, la réglementation des transports oblige les transporteurs à maintenir individuellement chaque voiture.

Selon le type de législation ou selon la technique préférée, ce maintien est assuré par des liaisons mécaniques entre les points d'ancrage prévus sur chaque voiture et des tourets de brelage solidaires de la remorque porteuse, soit simplement par des cales, soit par des dispositifs plus élaborés faisant appel à des combinaisons de moyens pour l'immobilisation simultanée par calage de roues, mais aussi par accrochage d'un bras de maintien sur le pneu adjacent.

Beaucoup de transporteurs européens utilisent uniquement l'immobilisation par calage. L'efficacité de maintien s'avère suffisante dans la majorité des cas.

Par ailleurs, les cales offrent l'avantage d'un coût de revient peu important et d'une mise en place plus aisée. En effet, le maintien par brelage nécessite le montage de liaisons, sangles ou chaînes, leur accrochage et leur mise en tension. La succession et le nombre de ces opérations élémentaires et simples prennent un temps jugé important dans la durée totale de chargement. Par ailleurs, elle engendre une fatigue supplémentaire pour le personnel de chargement qui comprend pratiquement toujours uniquement le chauffeur du véhicule.

Il existe déjà plusieurs catégories de cales pour l'immobilisation de voitures automobiles sur une remorque de transport. On connaît ainsi la cale simple, de forme triangulaire, possédant des moyens de fixation sur des cornières disposées de part et d'autre du chemin de roulement sous la forme de tiges transversales d'immobilisation.

Une version plus récente comporte une base triangulaire et des verrous sous la forme de tiges verticales à extrémité libre recourbée venant s'ancrer dans les perforations du chemin de roulement et s'y bloquer par rotation de la tige. Un verrou de chaque côté permet d'assurer une immobilisation suffisante de la cale pour garantir le maintien du véhicule.

Ce type de cale nécessite un démontage pour le chargement et pour le déchargement car elles constituent un obstacle de blocage sur le passage des voitures. Ainsi, les montages et démontages multiples occasionnent une perte de temps appréciable.

Par ailleurs, lors de trajets à vide, le transporteur a le choix entre remettre les cales à leur emplacement sur le chemin de roulement ou les ranger dans un caisson.

Dans le premier cas, on observe deux difficultés :

la première concerne le bruit des cales sur le chemin de roulement lorsqu'elles sont en contact sans appui avec le chemin de roulement,

la deuxième réside dans la perte de temps et la fatigue consécutives au démontage et remontage supplémentaires nécessaires à chaque chargement et déchargement.

Dans le second cas, il faut bien entendu ménager une place supplémentaire pour le rangement des cales d'où une plus value pour le matériel de transport.

Des réalisations élaborées de ces cales concernent des versions pliables par ouverture de la structure triangulaire et pose à plat de ses éléments composants par exemple par pivotement autour d'axes libres.

Cet avantage permet la fixation pratiquement à demeure des cales dans la mesure où l'empattement des véhicules reste identique.

On remarque, toutefois, des difficultés de déblocage en configuration d'appui. En effet, la force d'appui quelque fois importante, rend les verrous malaisés, voire impossibles à ouvrir. Le personnel doit alors monter dans la voiture concernée, desserrer le frein et la déplacer pour dégager la cale. Cette manoeuvre supplémentaire provoque une perte de temps conséquente.

Par ailleurs, la structure pliable disposée à plat est source d'un bruit important lors du trajet à vide.

La présente invention a pour but de remédier aux inconvénients des cales classiques, même escamotables. A cet effet, elle se rapporte à une structure pliable en dièdre pivotant rabattable à plat, ancré en deux points dans les perforations du chemin de roulement présentant au moins deux crans pour régler la position de contact entre deux intervalles de perforations, la partie avant présentant un levier de déclenchement provoquant l'affaissement de la cale. Ladite cale présente, de plus, des moyens d'accrochage en position à plat pour faire corps avec le chemin de roulement lors du roulage à vide.

Outre la possibilité de fractionner l'intervalle entre deux perforations successives du chemin de roulement, la cale selon l'invention offre un pliage aisé et une mise à plat parfaite pour ne présenter sur le chemin de roulement qu'une épaisseur réduite.

De plus, son mécanisme d'accrochage permet de la rendre solidaire de la tôle perforée et d'éviter ainsi les mouvements générateurs de bruit.

On remarque ensuite un déblocage aisé de la cale grâce au levier de déclenchement et ceci même sous des efforts de charge importants. La cale s'affaisse dans tous les cas.

D'autres caractéristiques et avantages ressortiront de la description qui suit effectuée à titre d'exemple non limitatif sur une forme de réalisation en référence aux dessins accompagnants dans lesquels :

- La figure 1 est une vue en perspective côté avant de la cale escamotable selon l'invention.

- La figure 2 est une vue en perspective côté arrière de la cale escamotable selon l'invention.

- La figure 3 est une vue de profil à l'état monté montrant les deux positions possibles d'appui.

- La figure 4 est une vue de profil cale dépliée reposant à plat sur le chemin de roulement.

La cale escamotable 1 selon l'invention est destinée à l'immobilisation des voitures de tourisme ou véhicules transportés sur des remorques équipées de chemins de roulement en tôle perforée.

0128992

- 5 -

Les perforations 2 sont disposées en successions linéaires parallèles aux bords selon des motifs
géométriques répétitifs en alternance de dispositions
longitudinales et transversles. Ces perforations
2, de forme générale rectangulaire, assurent un
certain effet antidérapant et permettent la fixation
temporaire des cales et butées à intervalles déterminés
par le pas de répétition des perforations 2.

La cale escamotable 1 selon l'invention
possède une structure triangulaire articulée du
type en dièdre. Elle repose sur le chemin de roulement
par un plan d'assise ou socle 3 présentant une découpe
définissant une forme générale en V. Les extrémités
libres des branches divergentes 4 et 5 de cette
base comportent, soit sous la forme d'une prolongation,
soit sous la forme de pièces rapportées, des pattes
de fixation 6 de conformation adaptée pour venir
se loger à maintien par imbrication dans les perforations correspondantes 2 d'une même ligne transversale.
Les pattes de fixation 6 présenteront par exemple
une extrémité plane 7 parallèle au plan d'assise
3 et un plan oblique 8 de raccordement au plan d'assise
3.

La cale offrira ainsi une immobilisation
satisfaisante en appui longitudinal pour réaliser
le blocage efficace de la roue correspondante du
véhicule transporté.

Le plan d'assise 3 se poursuit vers l'avant
par une zone frontale d'appui 9 présentant deux
butées successives et parallèles 10 et 11 sur une
desquelles vient reposer la base de la surface de
maintien 12 constituée par un cadre incliné maintenu
en inclinaison par deux biellettes 13 de liaison
avec le plan d'assise 3. Ces biellettes sont montées
pivotantes en partie inférieure sur le socle 3 par
exemple à l'extrémité des pattes de fixation 6.

Elles sont reliées également à pivotement avec la surface de maintien 12 par exemple par une liaison à jumelage.

La surface de maintien 12 est formée de deux pièces transversales d'appui 14 et 15 reliées entre elles par une barre de fer plat d'assemblage 16. Chaque pièce 14 ou 15 est conformée en extrémité ou comporte, solidarisé à ses extrémités, un fourreau ou palier tel que 17 pour le passage et le maintien d'axes longitudinaux. Les pièces transversales 14 et 15 jouent le rôle de béquille et constituent, avec le fer plat 16 le cadre de la surface de maintien 12. Cette surface est complétée par l'axe de jumelage 18 des biellettes 13 constituant également l'axe général de pivotement de la cale.

La surface de maintien 12 repose sur le socle 3 par l'intermédiaire d'un mécanisme de verrouillage 19 en postiion montée. Ce mécanisme est constitué essentiellement par un axe de dégagement 20 pourvu à chacune de ses extrémités d'une poignée de manoeuvre telle que 21. L'axe 20 comporte, en position centrale, deux éléments plats de basculement tels que 22, prévus pour opérer le léger relevage de l'axe 20, relevage suffisant à son dégagement d'avec l'une ou l'autre butée 10 ou 11.

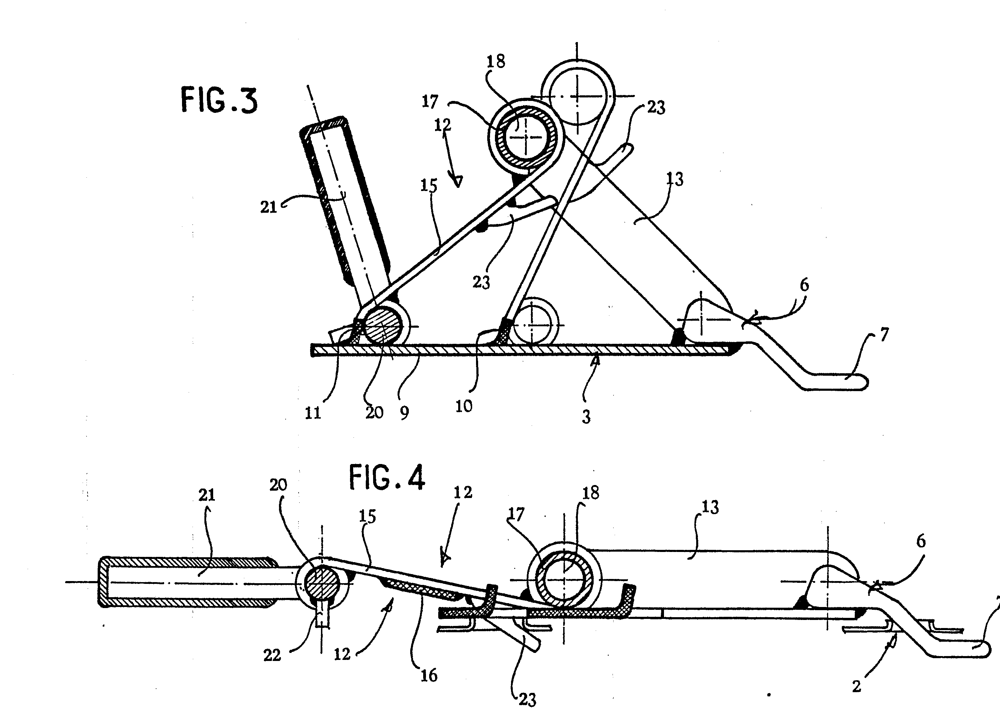

Chaque pièce transversale 14 ou 15 possède sur sa face arrière une patte d'accrochage 23 destinée à immobiliser à plat la cale sur le chemin de roulement en position escamotée telle que représentée en figure 4.

Cet accrochage en position dépliée utilisée au cours du transport à vide assure le contact permanent du corps de la cale avec le chemin de roulement, évitant ainsi les bruits métalliques désagréables provoqués par les secousses et trépidations du roulage à vide.

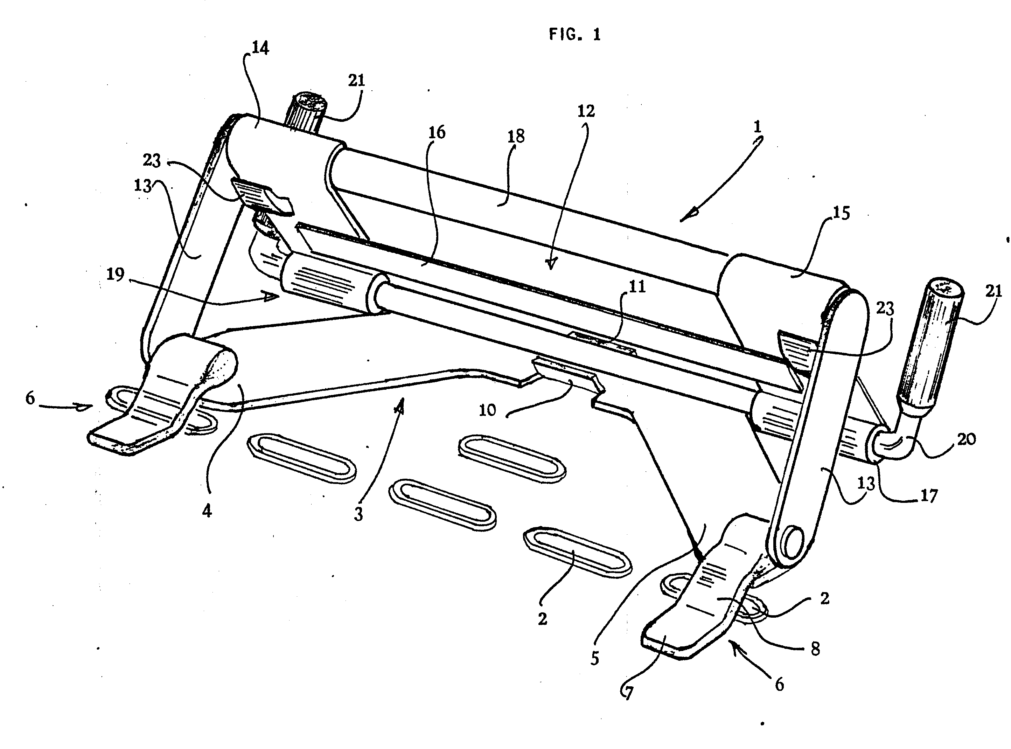

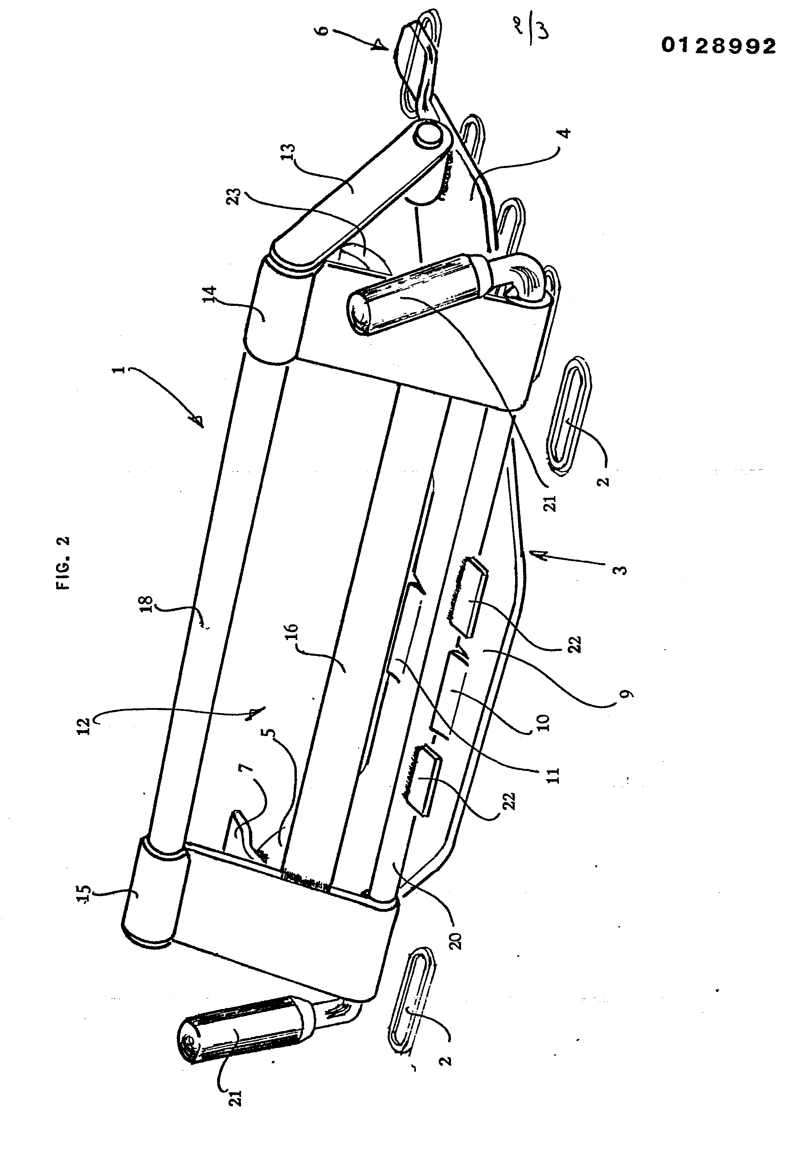

Les butées de blocage 10 et 11 peuvent être réalisées par des pièces rapportées, mais aussi comme le montrent les figures 1 et 2, sous la forme de crevés pratiqués dans la zone frontale d'appui 9. L'intervalle entre les deux butées correspond à une fraction du pas longitudinal des perforations 2 pour permettre de réaliser une position d'appui intermédiaire.

De façon plus générale, les butées peuvent être en nombre quelconque de façon à obtenir plusieurs positions intermédiaires d'appui sans déplacer la cale.

On décrira ci-après les différentes phases de fonctionnement et d'emploi de la cale escamotable selon l'invention.

Lors de la première manoeuvre, on dispose les cales à l'état monté devant ou derrière les pneus du véhicule à immobiliser. A cet effet, le mécanisme de verrouillage permet, grâce à ses positions intermédiaires, de réaliser le contact suffisant de l'axe de jumelage 18 avec le pneu.

Lors du dégagement des véhicules, il suffit d'actionner la poignée de manoeuvre 21 pour relever légèrement l'axe 19 et le faire passer au-dessus de la butée voisine et dégager ainsi la surface de maintien 12. Elle bascule immédiatement sous l'effet du poids autour de l'axe de jumelage 18. Le dièdre s'affaisse et la cale se place d'elle même en position dépliée à plat contre le chemin de roulement.

Il suffit de relever légèrement la surface de maintien 12 pour faire entrer les pattes d'accrochage 23 dans les perforations adjacentes 2 et assurer ainsi le blocage en position repliée en contact d'appui avec le chemin de roulement.

En raison de sa faible épaisseur, notamment dans sa partie centrale et de son maintien dans cette position, le véhicule peut rouler sans difficulté au-dessus de la cale sans crainte de la déformer ou de la déplacer.

Dans cette position, les éléments plats de basculement 22 sont dirigés vers le bas et ne gênent en aucune façon le passage de la roue.

Diverses variantes directes et modifications simples de la cale décrite ci-dessus telles que substitutions des moyens équivalents, adjonction d'éléments inopérants et autres changements sans apport inventif ne sauraient échapper à la présente protection.

0128992

REVENDICATIONS

1. Cale escamotable formée de plusieurs structures articulées entre elles pour l'immobilisation de voitures automobiles en charge sur un véhicule de transport routier à chemin de roulement pourvu de perforations (2), cale venant s'immobiliser dans les perforations (2) du chemin de roulement caractérisé par un mécanisme de verrouillage (19) à plusieurs positions pour le maintien à l'état monté, ledit mécanisme coopérant avec le plan d'assise ou socle (3) par des moyens de blocage afin d'obtenir, pour un même intervalle de perforations (2) plusieurs positions intermédiaires de calage et en ce que l'une des structures possède des moyens d'accrochage dans les perforations du chemin de roulement pour le maintien de la cale à plat contre le chemin de roulement en vue d'éviter les bruits métalliques lors du roulage à vide.

2. Cale selon la revendication 1, caractérisée en ce que la surface d'assise ou socle (3) affecte une forme en V présentant à chacune de ses extrémités une patte de fixation (6) à extrémité plane (7) parallèle au plan de roulement et à plan oblique de raccordement 8.

3. Cale selon les revendications 1 et 2, caractérisée en ce que le moyen de verrouillage (19) est constitué d'un axe de dégagement (20) monté pivotant à la base de la surface de maintien (12) formant la structure repliable arrière, axe possédant en extrémité des poignées de manoeuvre (21) et en partie centrale des saillies ou éléments plats rapportés tels que (22) coopérant avec le plan d'assise (3) en vue du relevage de l'axe (20) pour son dégagement des moyens de blocage.

4. Cale selon les revendications 1 et 3 caractérisée en ce que les moyens de blocage sont des butées (10) et (11) rapportées ou conformées

0128992

- 10 -

dans le plan d'assise (3) contre l'une desquelles vient s'immobiliser l'axe de dégagement (20), chaque butée étant décalée d'une distance correspondant à une fraction de l'intervalle existant entre deux perforations successives permettant d'obtenir plusieurs positions intermédiaires de calage sans déplacement de la cale.

5. Cale selon la revendication 1 caractérisée en ce que les moyens d'accrochage sont des pattes d'accrochage (23) adaptées pour venir se fixer dans les perforations (2), lesdites pattes étant solidarisées à la face arrière de la structure repliable arrière de manière à permettre l'immobilisation à plat de ladite structure sur le chemin de roulement.

6. Cale selon la revendication 1 caractérisée en ce que la structure repliable avant est constituée par deux biellettes telles que 13 articulées sur le plan d'assise (3) et reliées entre elles par un axe de jumelage (18) coïncidant avec l'axe de pivotement des deux structures repliables.

FIG. 1

1/3

0128992

FIG. 2

FIG.3

FIG.4

**0128992**

Numéro de la demande
Office européen
des brevets

**RAPPORT DE RECHERCHE EUROPEENNE**

EP  83  44  0065

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-2 837 038  (FAHLAND) <br> * Revendication 1; figures 5,7 * | 1 | B 60 P    7/08 |
| A | US-A-1 628 854  (MICHOD) | | |
| A | DE-C-  940 203  (MATARE) | | |

DOMAINES TECHNIQUES
RECHERCHES (Int. Cl. ³)

B 60 P
B 61 D

Le présent rapport de recherche a été établi pour toutes les revendications

| Lieu de la recherche <br> LA HAYE | Date d'achèvement de la recherche <br> 27-06-1984 | Examinateur <br> SCHMITTER J.M. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

 

& : membre de la même famille, document correspondant

OEB Form 1503 03 82